Europäisches Patentamt

European Patent Office

Office européen des brevets

(19)

(11) Publication number: **0 125 224**
**A1**

## (12) EUROPEAN PATENT APPLICATION

(21) Application number: **84850140.9**

(22) Date of filing: **02.05.84**

(51) Int. Cl.³: **C 01 F 11/46**

(30) Priority: **06.05.83 SE 8302591**

(43) Date of publication of application:
**14.11.84 Bulletin 84/46**

(84) Designated Contracting States:
**AT BE CH DE FR GB IT LI LU NL SE**

(71) Applicant: **Boliden Aktiebolag**
**Box 5508**
**S-114 85 Stockholm(SE)**

(72) Inventor: **Kullenberg, Nils Eric Ferdinand**
**Jonstorpsvägen 96**
**S-263 00 Höganäs(SE)**

(72) Inventor: **Persson, Lars-Erik Herbert**
**Alegatan 26**
**S-252 60 Helsingborg(SE)**

(74) Representative: **Inger, Lars Ulf Bosson et al,**
**Boliden AB Patent & Trade Marks Box 5508**
**S-114 85 Stockholm(SE)**

(54) A method for producing fibrous gypsum.

(57) The present invention relates to a method for producing acicular calcium sulphate crystals in anhydrite form (anhydrite fibre gypsum), in which gypsum is added to a slightly basic or slightly acid aqueous solution, optionally in the presence of aluminium ions, at room temperature. The calcium sulphate dihydrate is isolated from this solution, subsequent to re-crystallization. This dihydrate gypsum is dissolved in a sulphuric-acid solution containing at least 35% $H_2SO_4$, preferably at elevated temperature, and is permitted to re-crystallize to form acicular calcium sulphate crystals in anhydrite form.

EP 0 125 224 A1

## A METHOD FOR PRODUCING FIBROUS GYPSUM (II)

### Description

### Technical field

The present invention relates to a method for producing acicular gypsum crystals, so-called fibrous gypsum, in anhydrite form, by dissolving and transforming calcium sulphate ($CaSO_4 \cdot \frac{1}{2}H_2O$, $CaSO_4 \cdot 2H_2O$), said crystals having a length which is from 10-100 times their thickness.

The object of the present invention is to provide a method by which acicular gypsum crystals containing no water of crystallization can be produced, these gypsum crystals being suitable for admixture with cellulose-fibre material, building materials, such as asbestos-fibre substitutes, etc.

### Background art

Gypsum has been the subject of research and development for a great many years, and attempts have been made to find a use therefor within various fields, with the aim of finding a use for the large amounts of gypsum precipitates obtained, and particular those obtained when producing phosphoric acid, in accordance with the wet process. Gypsum is also precipitated in other chemical processes, within the so-called heavy inorganic chemical industry. Because present day gypsum precipitates contain undesirable substances, they cannot be dumped freely into the sea, but must first be limed and then dumped on land, therewith incurring heavy handling costs.

Gypsum is today used by the building-material industry, and is mixed with cement or used to produce gypsum panels and sheeting, which is used as building material in the construction of buildings, and in particular in the construction of internal walls.

It has also been proposed to admix gypsum with cellulose fibres, in order to reduce the need for raw wood-materials in the paper and board manufacturing industries.

2                                    0125224

When manufacturing building board, and also when admixing gypsum with cellulose fibres, it is desirable to have the gypsum in fibre form, i.e. in the form of acicular crystals, in order to improve thereby the manageability and mechanical strength of the gypsum.

Various methods have been proposed for manufacturing so-called fibrous gypsum. For example, DE-A1-28 54 722 describes a method for preparing calcium sulphate-$\alpha$-hemihydrate, from, inter alia, calcium sulphate dihydrate, calcium sulphate-$\beta$-hemihydrate or calcium sulphate anhydrite, in which method an aqueous slurry of such starting material is subjected to a hydrothermal reaction, to form acicular and/or particulate gypsum crystals. To this end, there is added to the slurry a powderous inorganic substance, such as talc, silica, calcium carbonate, calcium sulphate anhydrite in solution, or calcium sulphate hemihydrate. The resultant fibrous calcium sulphate-$\alpha$-hemihydrate can be converted to anhydrite form by calcination, whereupon the resultant acicular crystals are transformed to particulate gypsum.

The reaction itself is carried out in an autoclave, by heating an aqueous slurry to 100-180°C for 1-90 minutes, normally 120-130°C for 5-10 minutes.

The described method is heat demanding and it is not possible to produce by means of said method a product which is pure and which does not contain silica, talc, clay etc.

In DE-A1-26 13 651; DE-A1-26 59 860 and DE-A1-26 59 861 there is described methods for producing fibrous gypsum in the form of $\alpha$-hemihydrate gypsum or anhydrite gypsum, starting from calcium sulphite which is oxidized to calcium sulphate-$\alpha$-anhydrite at elevated temperatures and pressure over a considerable length of time (130°C; 2 kp/cm$^2$; 1 hour). Calcination of this gypsum at 200-800°C results in anhydrite fibrous gypsum. This method is also energy consuming and demanding on the apparatus used.

All of the aforecited methods are relatively complicated, and none enables a pure gypsum product of anhydrite gypsum to be obtained in the form of so-called fibrous gypsum.

## Disclosure of the present invention

It has now been surprisingly found possible to produce fibrous gypsum in anhydrite form in accordance with the present invention, in a simple and rational manner. The invention is characterized by dissolving gypsum in a basic or slightly acid, aqueous solution, optionally in the presence of aluminium ions; isolating calcium sulphate dihydrate from said solution, subsequent to crystallization; dissolving the thus obtained gypsum in sulphuric acid containing at least 35% $H_2SO_4$, preferably at elevated temperature; and permitting the gypsum to re-crystallize to form fibrous anhydrite gypsum.

The gypsum used to produce the fibrous gypsum may be gypsum obtained from processes in which phosphoric acid is produced in accordance with the wet method, or gypsum obtained from flue-gas purifying plants, or when an extremely pure product is desired, from pure natural gypsum.

Gypsum obtained from phosphoric-acid manufacturing processes often contains solid contaminants, deriving from the apatite or the phosphate used. These contaminants can be readily separated from the gypsum, when it is dissolved.

The present invention will now be described in more detail with reference to the following examples.

## Example 1

200 g α-hemihydrate gypsum were slurried in 1000 ml of water at 20°C and were allowed to re-crystallize to dihydrate gypsum at pH 3 for 4 hours in the presence of 100 g of aluminium sulphate (17% $Al_2O_3$). The resultant dihydrate gypsum was filtered off and recrystallized in 40% $H_2SO_4$-solution, after dissolution to super-saturation at 80°C for 1 hour. In this way there were obtained acicular calcium sulphate-anhydrite crystals having a length ∿20 /um and a thickness ∿3 /um.

## Example 2

200 g of $\alpha$-hemihydrate gypsum were slurried in 1000 ml of water at 20°C and were permitted to re-crystallize to dihydrate gypsum at pH 3 for 8 hours in the presence of 50 g of aluminium sulphate (17% $Al_2O_3$). The dihydrate gypsum obtained was filtered off and re-crystallized in 50% $H_2SO_4$-solution after dissolution to super-saturation at 85°C for 2 hours. In this way there was obtained acicular calcium-sulphate anhydrite-crystals having a length ~10 µm and a thickness ~1 µm. The crystals had an oblong to square cross-sectional configuration, the width of said crystals being ~2 µm.

In the aforegoing, a slightly acid environment has been used for the re-crystallization of $\alpha$-hemigypsum. The same result is obtained, however, when using a weakly basic environment.

## CLAIMS

1.    A method for producing acicular calcium sulphate crystals in anhydrite form by transforming particulate gypsum, characterized by adding gypsum to a slightly basic or slightly acid aqueous solution, optionally in the presence of aluminium ions, at room temperature; isolating calcium sulphate dihydrate from said solution subsequent to re-crystallization; dissolving the dihydrate gypsum in a sulphuric-acid solution containing at least 35% $H_2SO_4$, preferably at elevated temperature; permitting re-crystallization to acicular calcium sulphate crystals in anhydrite form to take place; and by isolating said crystals.

2.    A method according to claims 1, characterized in that the amount of aluminium used is 0.5-2.0% calculated as $Al_2O_3$.

3.    A method according to claims 1, characterized in that the sulphuric-acid solution contains 35-55% $H_2SO_4$.

4.    A method according to claims 1, characterized in that the temperature is 65-100°C.

5.    A method according to claim 1, characterized in that re-crystallization to dihydrate gypsum takes place for from 1-12 hours.

6.    A method according to claim 1, characterized in that re-crystallization to acicular calcium sulphate crystals in anhydrite form takes place for 0.5-3 hours.

7.    A method according to claim 1, characterized by starting from α-hemi-anhydrate gypsum for re-crystallization to dihydrate gypsum.

8.    The use of acicular calcium sulphate crystals in anhydrite form as a filling agent in the manufacture of paper.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | EP-A-0 012 487 (STAMICARBON) --- | | C 01 F 11/46 |
| X | EP-A-0 044 120 (STAMICARBON) *Claims* --- | 1 | |
| X | EP-A-0 076 551 (UNIE VAN KUNSTMEST-FABRIEKEN B.V.) *Claims* --- | 1 | |
| X | DE-A-2 659 861 (HYOGO PREFECTURAL GOVERNMENT) *Claim* | 8 | |

TECHNICAL FIELDS
SEARCHED (Int. Cl. ³)

C 01 F
C 04 B
C 09 C
D 01 F

The present search report has been drawn up for all claims

| Place of search | Date of completion of the search | Examiner |
|---|---|---|
| STOCKHOLM | 04-07-1984 | LINDELL, B-M |